# EUROPEAN PATENT SPECIFICATION

(11) **EP 0 821 819 B1**
(45) Date of publication and mention of the grant of the patent: **11.06.2003**
(21) Application number: 95927438.2
(22) Date of filing: 30.06.1995
(51) Int. Cl.: G09B 5/02, G09B 5/06, G09B 7/04

(54) **METHOD OF INSTRUCTING/TUTORING USING A FULL MOTION PERSONAGE IN WINDOW SUPERIMPOSED ON EDUCATIONAL MATERIAL**
AUSBILDUNGSUNTERRICHTSMETHODE UNTER ANZEIGE DES AUF EINEM LERNMATERIALBILD ÜBERLAGERTEN BEWEGTBILDES EINER PERSON
PROCEDE D'ENSEIGNEMENT/DIRECTION D'ETUDES FAISANT INTERVENIR UN ANIMATEUR EN MOUVEMENT COMPLET EN SUPERPOSITION DANS UNE FENETRE D'ECRAN DIDACTIQUE

(43) Date of publication of application: 04.02.1998
(73) Proprietor: Beye, Rick, A., Fairlawn, NJ 07410 (US)
(72) Inventor: Beye, Rick, A., Fairlawn, NJ 07410 (US)
(74) Representative: Powell, Timothy John
(86) International application number: US9509404
(87) International publication number: WO97002551

(56) References cited:
- JP-A- 2 284 192
- US-A- 4 797 750
- US-A- 4 804 328
- US-A- 4 884 972
- US-A- 5 388 993

## Description

### Background of the Invention

The present invention relates to the mechanization of the educational process using video display devices. The display devices may be free standing cathode ray tubes (CRTs) as in television sets or connected to computers as in computer monitors. The video display devices may also belong to the next generation: liquid crystal displays (LCDs). The educational process involves exposing the interested student to pertinent material in an organized, structured fashion so as to enable the student to assimilate or learn the material. The student is exposed to the material by displaying it on the video device so that the student may see the information while listening to a "tutor" explain it in greater detail. The essence of the invention is the simultaneous display of the tutor's visage along with the material so as to create the sensation that the student is being individually tutored in a non-threatening, conversational manner.

### Description of Prior Art

Since their introduction, film and video tape information storage and retrieval mechanisms have been used to present material to students with the intent to educate and inform them. Recently, educational information programs using video have been greatly enhanced through the ability to store them in digitized form on computer disks and tape. Historically, the educational presentation method involves displaying still or moving images with an instructor's voice narrating the educational content.

While this method works well with classroom-based groups of students, it suffers when the student is viewing the material in isolation. The home study student requires the same socialized feedback that is present in group study. But, by definition, this student is isolated from other students and working through the educational material on his or her own. What this student needs is someone to share his or her learning experience. Someone to team with the student and to be a mentor to the student.

The state of the art prior to this invention discloses a "speech synchronized animation" instructional method whereby a portion of the display area was dedicated to a cartoon image modeling facial movements accompanying the creation of speech sounds. **Gasper,** U.S. Patent No.: 4,884,972. This "talking head" was limited in function, devoid of any human interaction, and unable to satisfy the student's need for a socially and psychologically comforting and reinforcing learning environment.

US Patent Number 5,388,993 discloses a system and method for building a help function in the form of a tutorial that physically demonstrates to an end user the function that the end user wants to understand. The invention includes a script language that includes tags or commands that the information developer can use in demonstrating the application program and providing tutorial information to the user. The tutorial may include a display window, which may also be used to display video to the user.

### Summary of Invention

It is the object of the Personal Video Tutor invention to provide the isolated student with the sensation that there is an individual tutor working with them and encouraging them as they learn the material. The omnipresent visage of a real person sharing the learning space on the display creates this sensation. The student can see who is guiding them through the material, who is responsible for its content and design, and who is particularly interested in their achievement.

Underlying the significance of this invention is the perception that present educational institutions must adapt to a changing world. The employable "half-life" of a college degree grows shorter every year. Society will continue to require constant re-education of its work force in order to remain productive and competitive. This continuing education must coincide with current employment. The time and expense of travel to and from classroom based education is wasted when the same educational service can be delivered to the individual's home. Within this "home based", educational environment the student has a flexible schedule with flexible learning rates. But the student will suffer a psychological impairment when separated from the social dynamics of studying with a group students. Unless this social withdrawal problem can be overcome, the student will suffer motivational lapses lowering their achievement and their rate of achievement.

The invention addresses this "home study", social isolation problem and attempts to humanize and personalize the inevitable mechanization and individualization of the educational process.

The invention provides a method of instructing/tutoring a student in accordance with claim 1 of the appended claims.

### Brief Description of the Drawings

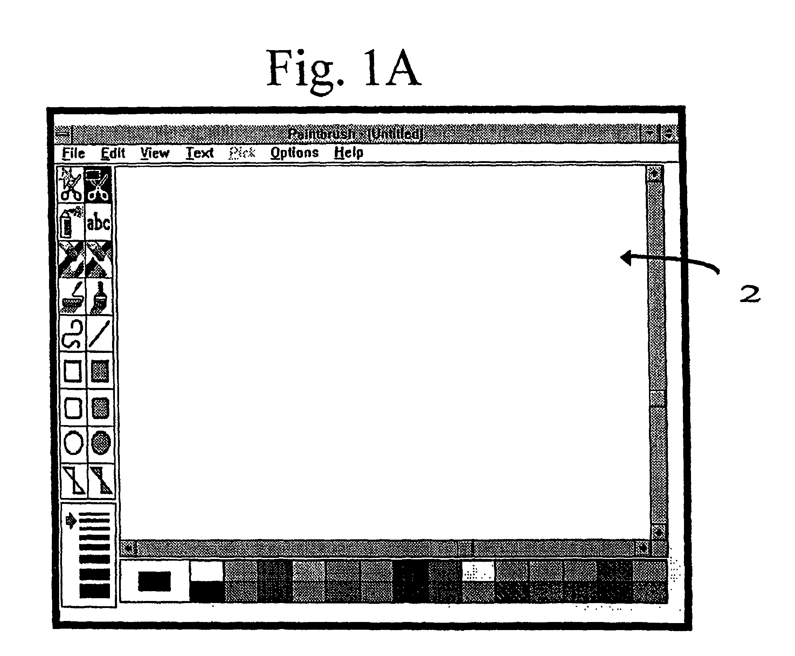

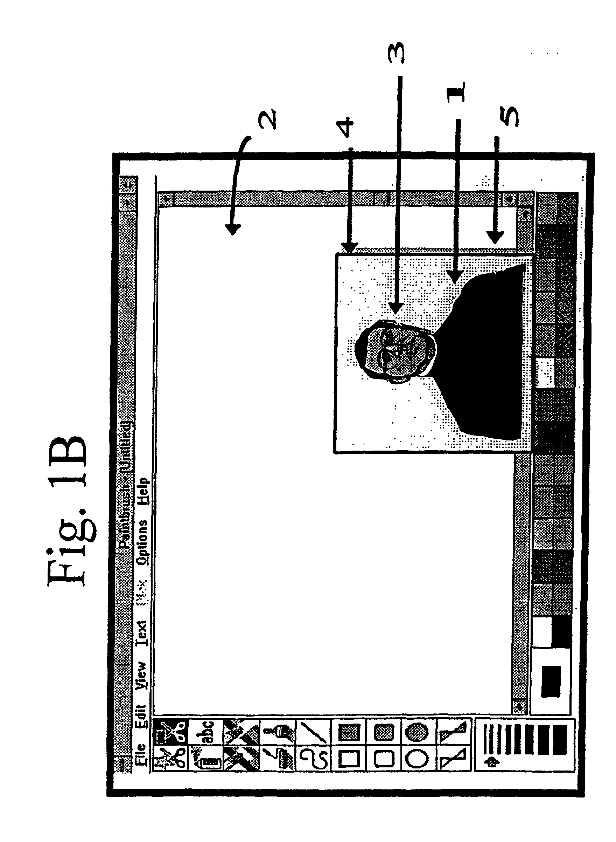

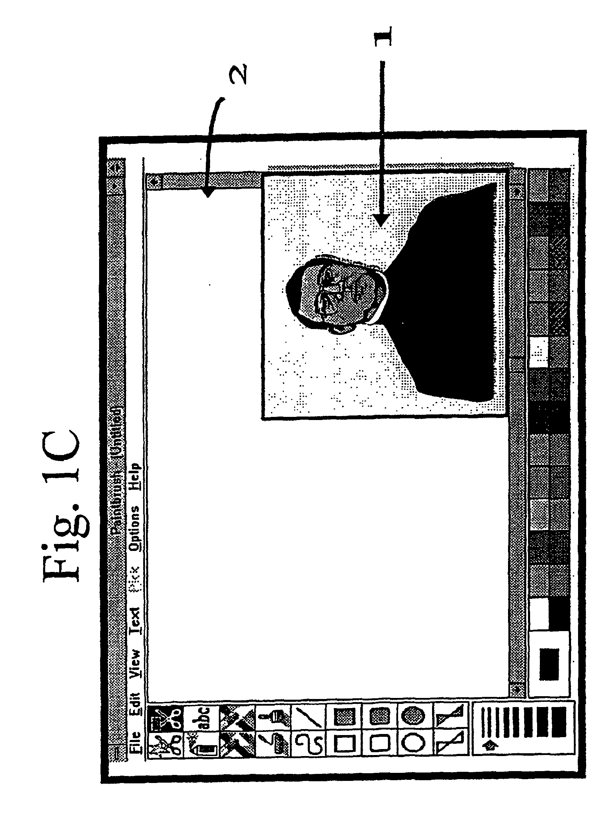

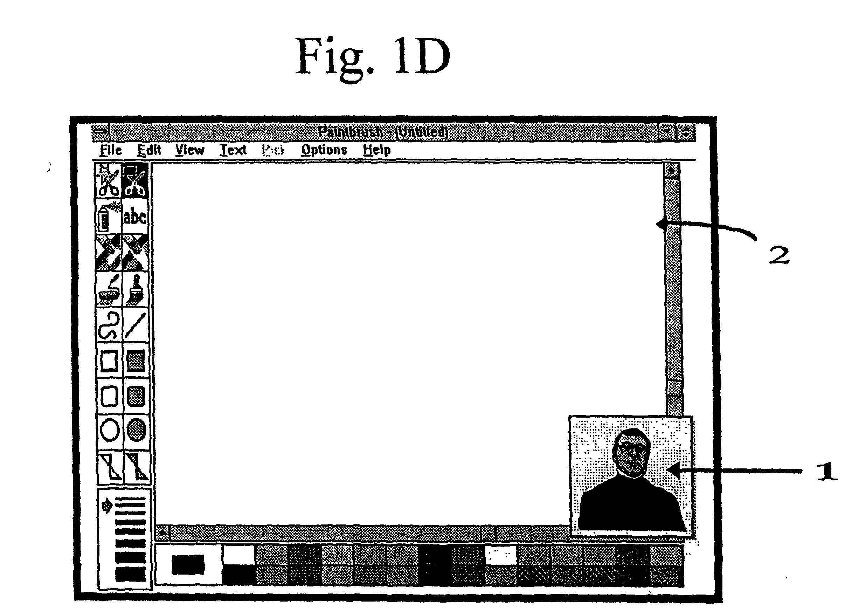

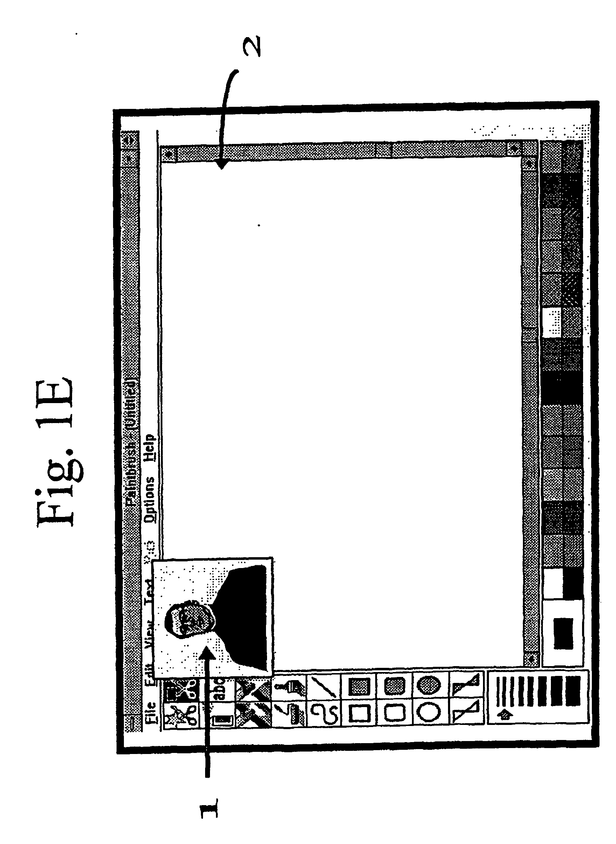

The present invention will be more fully understood by reference to the following detailed description thereof when read in conjunction with the attached drawings, see Figures 1(A), (B), (C), (D) and (E). Figures 1 (A), (B), (C) (D) and (E) are frontal views of the display surface of a video screen.

### Detailed Description of the Drawings

The display surface depicted as Figure 1 can be either a television screen, with the images being received from video tape or transmitted over radio waves or cable, or a computer monitor with the images being received from computer storage media, such as magnetic hard disks, magneto-optical disks or laser disks. The images can be view only, as when a video tape and television screen is being used, or interactive, as when a computer program is controlling the flow of the images and the student is enabled to interact with the flow. The educational material may be still images - charts, graphs, photographs, text slides, etc. - or full motion pictures.

The display surface is labeled as reference numeral 2, and is depicted exclusively in Figure 1(A). The educational material targeted for student assimilation is presented in this area. For purposes of illustration, Figure 1(A) depicts the display of a running computer software program. The subject matter to be assimilated in this illustration is the operations and functions of this particular software application program.

Figures 1(B), (C), (D), and (E) add the critical element of this invention: that portion of the display area which contains the image of the instructor/tutor - labeled as reference numeral 1.

The image of the instructor/tutor - reference numeral 1 - should be readily identifiable so as to not confuse it with the educational material being presented. This is generally accomplished by incorporating a visible rectangular border framing the instructor/tutor's image, reference numeral 4. The framing effect can be enhanced by adding a "drop shadow" which visually supports the image of the instructor/tutor as floating above the subject matter, reference numeral 5.

Every effort should be made to allow the eyes - reference numeral 3 - of the instructor/tutor to be observed. The eyes should appear to address the student viewing the display, except when drawing the student's attention to those areas of the display being specifically referenced. The instructor/tutor's eye movements should give the student the sensation that the instructor/tutor is directly addressing the student, or is sitting beside the student and looking over the student's shoulder when pointing to specific information being displayed.

The instructor/tutor's image is always present. It's size may be changed, enlarged, Figure 1(C) or reduced, Figure 1(D). It is moved, Figure 1(E) as needed, to anywhere on the display area to draw attention to specific parts of the subject matter displayed or to avoid obscuring those areas of the display containing important material. This movement also reinforces the sensation that the instructor/tutor is floating above the material being presented and is accompanying and guiding the student throught the learning process.

The verbal content presented by the instructor should be more than mere narration. It should be conversational and motivational. When implemented in conjunction with a computer program, it should be interactive, re-acting appropriately from time to time to student responses.

The instructor's voice should be pleasant and clearly audible over whatever sound may accompany the educational material.

## Claims

1. A method of instructing/tutoring a student in a particular subject matter of interest using an educational presentation device to facilitate the assimilation and comprehension of said subject matter comprising the steps of
a. providing a means for displaying at least one subject matter image upon a video display surface, selected from a group consisting of a television monitor, a computer monitor, and a liquid crystal display;
b. directing said student to view a presentation receivable from a suitable video source upon said displaying means, said presentation comprising:
i. displayed educational material conveying said subject matter as an image upon said video display surface,
ii. a displayed personage of an actual human instructor/tutor as a full motion image upon said video display surface, in a readily observable window which is constantly superimposed on said educational material during the presentation sequence and is purposely positioned so as to focus the student's attention on selected portions of the displayed material,
wherein said displayed personage of an instructor/tutor is moved to any location of the video display surface, so as to avoid obscuring or detracting from said displayed educational material, to draw attention to specific portions of the displayed material, and to reinforce the sensation and simulation of live instructing/tutoring, and
iii. a scripted and directed sequence of instruction presented by the said displayed personage of an actual human instructor/tutor based on said instructor/tutor's expert knowledge of said educational material and the discerned capabilities of the student.

2. The method of instructing/tutoring a student as recited in claim 1, wherein said means for displaying further comprises means for displaying at least one still motion image upon said video display surface.

3. The method of instructing/tutoring a student as recited in claim 1, wherein said means for displaying further comprises means for displaying at least one full motion image upon said video display surface.

4. The method of instructing/tutoring a student as recited in claim 1, wherein said readily observable window is scaleably resizeable, such that said window may be enlarged and reduced as desired, so as to avoid obscuring or detracting from said displayed educational material.

5. The method of instructing/tutoring a student as recited in Claim 1, wherein said displayed personage of an instructor/tutor is presented such that the eyes of said instructor/tutor create the illusion that the instructor/tutor is paying personal attention to said student by shifting from clear eye contact with said student to specific portions of said educational mater al being referenced in order to draw the attention of said student to said specific portions.

## Patentansprüche

1. Verfahren zum Unterrichten bzw. zur Einzelunterweisung eines Lernenden bezüglich eines speziell interessierenden Gegenstandes unter Verwendung einer Lehr-Präsentationsvorrichtung zur Erleichterung der Aufnahme und des Verstehens des Gegenstandes, das folgende Schritte umfaßt:
a. Bereitstellen einer Anzeigevorrichtung für wenigstens ein den Lehrgegenstand darstellendes Bild auf einer Video-Anzeigeoberfläche, die aus der Gruppe ausgewählt ist, die Fernsehbildschirme, Computer-Monitore und Flüssigkristallanzeigen umfaßt,
b Anweisen des Lernenden, eine Präsentation zu betrachten, die von einer geeigneten Video-Quelle auf der Anzeigevorrichtung empfangen werden kann, wobei diese Präsentation folgendes umfaßt:
i. wiedergegebenes Lehrmaterial, das den Lehrgegenstand als Bild auf die Video-Anzeigeoberfläche bringt,
ii. eine wiedergegebene Personendarstellung eines wirklichen menschlichen Lehrers oder Tutors als voll bewegliches Bild auf der Video-Anzeigeoberfläche in einem ohne weiteres sichtbaren Fenster, das während der Präsentationssequenz ständig dem Lehrmaterial überlagert und absichtlich so positioniert ist, dass es die Aufmerksamkeit des Lernenden auf ausgewählte Teile des dargestellten Materials konzentriert, wobei die wiedergegebene Personendarstellung eines Lehrers oder Tutors zu irgendeiner Stelle der Video-Anzeigeoberfläche bewegt wird, um ein Verdecken oder ein Ablenken von dem wiedergegebenen Lehrmaterial zu vermeiden und die Aufmerksamkeit auf spezifische Teile des wiedergegebenen Materials zu lenken und das Gefühl und die Simulation eines live stattfindenden Unterrichts oder Einzelunterrichts zu verstärken und
iii. eine geschriebene und gesteuerte Sequenz von Unterweisungen, die von der wiedergegebenen Personendarstellung eines tatsächlichen menschlichen Lehrers oder Tutors basierend auf dem Expertenwissen des Lehrers oder Tutors bezüglich des Lehrmaterials und der erkannten Fähigkeiten des Lernenden dargeboten wird.

2. Verfahren zum Unterrichten bzw. zur Einzelunterweisung eines Lernenden nach Anspruch 1, bei dem die Anzeigevorrichtung weiterhin Mittel zur Wiedergabe von wenigstens einem Standbild auf der Video-Anzeigeoberfläche umfaßt.

3. Verfahren zum Unterrichten bzw. zur Einzelunterweisung eines Lernenden nach Anspruch 1, bei dem die Anzeigevorrichtung weiterhin Mittel zur Wiedergabe von wenigstens einem voll beweglichen Bild auf der Video-Anzeigeoberfläche umfasst.

4. Verfahren zum Unterrichten bzw. zur Einzelunterweisung eines Lernenden nach Anspruch 1, bei dem das ohne weiteres beobachtbare Fenster größenmäßig veränderbar ist, so dass das Fenster in gewünschter Weise vergrößert und verkleinert werden kann, um ein Verdecken oder ein Ablenken von dem wiedergegebenen Lehrrnaterial zu vermeiden.

5. Verfahren zum Unterrichten bzw. zur Einzelunterweisung eines Lernenden nach Anspruch 1, bei dem die wiedergegebene Personendarstellung eines Lehrers bzw. Tutors so dargeboten wird, dass die Augen des Lehrers bzw. Tutors die Illusion erzeugen, dass der Lehrer bzw. Tutor seine persönliche Aufmerksamkeit auf den Lernenden dadurch richtet, dass von einem direkten Augenkontakt mit dem Lernenden auf spezifische Teile des Lehrmaterials übergegangen wird, wobei dies alles stattfindet um die Aufmerksamkeit des Lernenden auf diese speziellen Teile zu lenken.

## Revendications

1. Procédé d'enseignement direction d'un étudiant dans une matière particulière d'intérêt utilisant un dispositif de présentation éducatif destiné à faciliter l'assimilation et la compréhension de ladite matière, ledit procédé comprenant les étapes consistant à :
a. fournir des moyens pour afficher au moins une image de la matière sur une surface d'affichage vidéo, sélectionnée parmi un groupe composé d'un écran de télévision, d'un écran d'ordinateur et d'un affichage à cristaux liquides ;
b. faire en sorte que ledit étudiant visualise une présentation pouvant être reçue à partir d'une source vidéo adaptée sur lesdits moyens d'affichage, ladite présentation comprenant :
i. un contenu éducatif affiché transmettant ladite matière en tant qu'image sur ladite surface d'affichage vidéo,
ii. un personnage affiché d'un enseignant/professeur réel en tant qu'image entièrement animée sur ladite surface d'affichage vidéo, dans une fenêtre facilement observable qui est constamment superposée sur ledit contenu éducatif durant la séquence de présentation et qui est positionnée intentionnellement de manière à retenir l'attention de l'étudiant sur des parties sélectionnées du contenu affiché, dans lequel ledit personnage affiché d'un instructeur/professeur est déplacé à n'importe quel endroit de la surface d'affichage vidéo, afin d'éviter de masquer ou de nuire audit contenu éducatif affiché, d'attirer l'attention sur des parties spécifiques du contenu affiché, et de renforcer la sensation et la stimulation d'un enseignement et d'une direction d'études en direct, et
iii. une séquence d'enseignement écrite et dirigée présentée par ledit personnage affiché d'un enseignant/professeur réel basée sur lesdites connaissances expertes de l'enseignant/du professeur sur ledit contenu éducatif et sur les capacités de discernement de l'étudiant.

2. Procédé d'enseignement direction d'un étudiant selon la revendication 1, dans lequel lesdits moyens d'affichage comprennent en outre des moyens pour afficher au moins une image de mouvement fixe sur ladite surface d'affichage vidéo.

3. Procédé d'enseignement direction d'un étudiant selon la revendication 1, dans lequel lesdits moyens d'affichage comprennent en outre des moyens pour afficher au moins une image animée sur ladite surface d'affichage vidéo.

4. Procédé d'enseignement direction d'un étudiant selon la revendication 1, dans lequel ladite fenêtre facilement observable est redimensionnable à l'échelle, de sorte que ladite fenêtre puisse être agrandie ou réduite comme on le souhaite, afin d'éviter de masquer ou de nuire audit contenu éducatif affiché.

5. Procédé d'enseignement direction d'un étudiant selon la revendication 1, dans lequel ledit personnage affiché d'un enseignant/professeur est présenté de manière à ce que les yeux dudit enseignant/professeur créent l'illusion que l'enseignant/professeur s'adresse personnellement audit étudiant en déplaçant son regard dudit étudiant à des parties spécifiques dudit contenu éducatif référencé afin d'attirer l'attention dudit étudiant sur lesdites parties spécifiques.
